# EUROPEAN PATENT SPECIFICATION

(11) **EP 2 429 331 B1**
(45) Date of publication and mention of the grant of the patent: **10.07.2019**
(21) Application number: 09844477.1
(22) Date of filing: 12.05.2009
(51) Int. Cl.: A45C 11/24, A45C 11/00, A45C 13/00, A45F 5/00, A45F 5/02, F16M 13/00, F16M 13/02, H04B 1/38

(54) **APPARATUS FOR SUPPORTING HANDHELD ELECTRONIC DEVICE**
VORRICHTUNG ZUM STÜTZEN VON IN DER HAND GEHALTENEN ELEKTRONISCHEN VORRICHTUNGEN
APPAREIL POUR LE SUPPORT DE DISPOSITIF ELECTRONIQUE DE POCHE

(43) Date of publication of application: 21.03.2012
(73) Proprietor: BlackBerry Limited, Waterloo, ON N2K 0A7 (CA)
(72) Inventor: YOUSSEFI-SHAMS, Kasra, Waterloo, Ontario N2L 3W8 (CA); SIMOES, Felipe Oliveira, Waterloo, Ontario N2L 3W8 (CA); YU, Michael Xingyi, Waterloo, Ontario N2L 3W8 (CA)
(74) Representative: MERH-IP Matias Erny Reichl Hoffmann Patentanwälte PartG mbB
(86) International application number: PCT/CA2009/000660
(87) International publication number: WO 2010/130022

(56) References cited:
- WO-A2-2006/007296
- WO-A2-2007/035438
- CA-A1- 2 378 553
- US-A- 5 906 031
- US-A- 5 988 577
- US-A- 6 141 417
- US-A1- 2003 007 634
- US-A1- 2004 226 836
- US-A1- 2006 237 495
- US-A1- 2006 246 963
- US-A1- 2008 110 946
- US-A1- 2009 117 956
- US-B2- 6 752 299

## Description

### TECHNICAL FIELD

This relates to the field of devices for supporting portable handheld electronic devices.

### BACKGROUND OF THE ART

A standard carrying case or pouch generally includes a clip. Such a clip can attach the case to such things as a belt or over the waistline of clothes. Mobile handhelds are carried in cases having such a clip. The clip is used to attach the case to the user's belt or over the waistline of their clothes, as examples, to make carrying easier.

It is sometimes desirable that the handheld device be sufficiently spaced from the person to whom the mobile handheld is attached.

Document US 2008/110946 A1 discloses a holder for an electronic device comprising a clip, a hub and a plurality of arms. The clip may further comprise a swivel connector, such that the hub is engaged with the clip via the swivel connector.

### SUMMARY OF THE INVENTION

According to the present invention, there is provided an apparatus for supporting a handheld electronic device according to claim 1 and a method for manufacturing such apparatus for supporting a handheld electronic device according to claim 6. The dependent claims relate to preferred embodiments.

In one example, there is provided an apparatus for supporting a handheld electronic device including a holster and a clip. The holster includes a pocket for receiving a handheld electronic device and supporting the received handheld electronic device. The clip is coupled to the holster and is configured for movement between an open position and a gripping position and is biased towards the gripping position. In the open position, spacing is provided between the clip and the holster so as to receive an article. In the gripping position, the clip is disposed such that, when an article is disposed between the clip and the holster, the article is gripped by the clip against at least one gripping surface portion of the holster under the force effecting biasing of the clip towards the gripping position. When the clip is disposed in the gripping position, and a handheld electronic device is received and supported by the pocket, coupling of the handheld electronic device to the article is thereby effected. When the coupling of the handheld electronic device to the article is effected, the minimum distance between the handheld electronic device each one of the at least one gripping portion of the holster is at least eighteen (18) millimetres.

In another example, there is provided an apparatus for supporting a handheld electronic device, comprising a holster and a clip. The holster includes a pocket for receiving a handheld electronic device and supporting the received handheld electronic device. The clip is coupled to the holster and configured for movement between an open position and a gripping position and being biased towards the gripping position, wherein, in the open position, spacing is provided between the clip and the holster so as to receive an article, and wherein, in the gripping position, the clip is disposed such that, when an article is disposed between the clip and the holster, the article is gripped by the clip against at least one gripping surface portion of the holster under the force effecting biasing of the clip towards the gripping position, and such that, when the clip is disposed in the gripping position, and a handheld electronic device is received and supported by the pocket, coupling of the handheld electronic device to the article is thereby effected. The holster further includes an operative interior holster surface fraction consisting of at least one operative interior holster surface portion which is configured to oppose and at least contribute support to a handheld electronic device when the handheld electronic device is received and supported within the pocket. When the clip member is disposed in the gripping position, each one of the at least one operative interior holster surface portion is spaced apart from each one of the at least one gripping portion of the holster by a respective minimum distance of at least eighteen (18) millimetres.

In a further example there is provided a method of manufacturing an apparatus for supporting a handheld electronic device. The method includes providing a holster perform, providing a clip, providing a stationary clip effecting integrator and a positionable clip effecting integrator, wherein, when provision of a holster is effected by coupling of the stationary clip effecting integrator to the holster perform and when the stationary clip effecting integrator is also coupled to the clip, a stationary clip is provided which is disposed in a stationary condition relative to the holster, and wherein, when provision of a holster is effected by coupling of the positionable clip effecting integrator to the holster perform and when the positionable clip effecting integrator is also coupled to the clip, a positionable clip is provided which is disposed in a positionable condition relative to the holster, and selecting one of the integrators. Formation of the apparatus is then effected, wherein the apparatus includes a holster coupled to the clip, wherein the holster includes the holster preform and the selected integrator, wherein the holster preform is coupled to the selected integrator, and wherein the selected integrator is coupled to the clip.

In a further example, there is provided an apparatus for supporting a handheld electronic device comprising a holster and a clip. The holster includes a pocket for receiving a handheld electronic device and supporting the received handheld electronic device. Further, the holster includes a stationary clip effecting integrator, and a clip mounting structure. The clip mounting structure is coupled to the stationary clip effecting integrator by a force effecting press-fit engagement of the clip mounting structure to the stationary clip effecting integrator. The clip is coupled to the clip mounting structure and configured for movement between an open position and a gripping position and being biased towards the gripping position, wherein, in the open position, spacing is provided between the clip and the holster so as to receive an article, and wherein, in the gripping position, the clip is disposed such that, when an article is disposed between the clip and the holster, the article is gripped by the clip against at least one gripping surface portion of the holster under the force effecting biasing of the clip towards the gripping position, and such that, when the clip is disposed in the gripping position, and a handheld electronic device is received and supported by the pocket, coupling of the handheld electronic device to the article is thereby effected. The stationary clip effecting integrator includes an interference structure which interferes with movement of the clip mounting structure in response to a force applied to the clip mounting structure for urging rotation of the clip mounting structure in a plane which is orthogonal to the direction of the force which is effecting the press-fit engagement of the clip mounting structure to the stationary clip effecting integrator.

### BRIEF DESCRIPTION OF THE DRAWINGS

Figure 1 is a rear perspective view of an embodiment of an apparatus;
Figure 2 is a front perspective view of the embodiment of the apparatus illustrated in Figure. 1;
Figure. 3 is a rear perspective view of the clip, the clip mounting structure, and the positionable clip effecting integrator of the embodiment illustrated in Figure 1;
Figure. 4 is a front perspective view of the clip, the clip mounting structure, and the positionable clip effecting integrator of the embodiment illustrated in Figure 1;
Figure 5 is an exploded view of the clip, the clip mounting structure, the positionable clip effecting integrator, the retainer, and the leaf spring of the embodiment illustrated in Figure 1;
Figure 6A is a side sectional elevation view of the embodiment illustrated in Figure 1, coupled to an article of clothing, and shown with a handheld electronic device disposed in the pocket, and illustrating one aspect of the embodiment;
Figure 6B is a side sectional elevation view of the embodiment illustrated in Figure 1, coupled to an article of clothing, and shown with a handheld electronic device disposed in the pocket, and illustrating an alternative aspect of the embodiment;
Figure 7 is a perspective view of one side of the postionable clip effecting integrator of the embodiment illustrated in Figure 1;
Figure 8 is a perspective view of another side of the positionable clip effecting integrator illustrated in Figure 7.
Figure 9 is a perspective view of one side of the clip mounting structure of the embodiment illustrated in Figure 1.
Figure 10 is a perspective view of another side of the clip mounting structure illustrated in Figure 9.
Figure 11 is a perspective view of one side of the retainer of the embodiment illustrated in Figure 1.
Figure 12 is a perspective view of another side of the retainer illustrated in Figure 11;
Figure 13 is a perspective view of one side of the clip of the embodiment illustrated in Figure 1.
Figure 14 is a front elevation view of the side of the clip illustrated in Figure 13;
Figure 15 is a perspective view of another side of the clip illustrated in Figure 13;
Figure 16 is a side elevation view of the clip illustrated in Figure 13;
Figure 17 is a perspective view of the leaf spring of the embodiment illustrated in Figure 1;
Figure 18 is an exploded view of the clip, the clip mounting structure, the stationary clip effecting integrator, the retainer, and the leaf spring of a second embodiment of the apparatus;
Figure 19 is a rear perspective view of the clip, the clip mounting structure, and the stationary clip effecting integrator of the second embodiment, in an assembled condition;
Figure 20 is a sectional side elevation view of the clip, the clip mounting structure, and the stationary clip effecting integrator of the second embodiment, in an assembled condition;
Figure 21 is a rear perspective view of the second embodiment; and
Figure 22 is a front perspective view of the second embodiment.

### DETAILED DESCRIPTION OF PREFERRED EMBODIMENTS

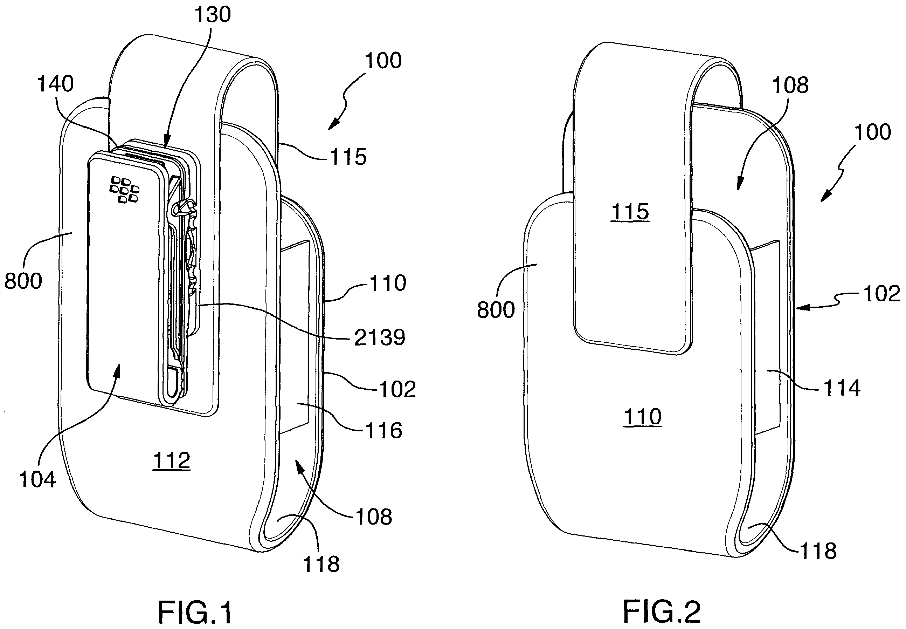

Referring to Figures 1, 2, 5, 6A, and 6B, there is provided an apparatus 100 for supporting a handheld electronic device 500. The apparatus 100 includes a holster 102 and a clip 104. The holster 102 includes a pocket 108 for receiving the handheld electronic device 500 and supporting the received handheld electronic device 500. The clip 104 is coupled to the holster 102 and configured for movement between an open position and a gripping position, and is biased towards the gripping position. For example, in some embodiments, the coupling is a pivotal coupling. In the open position, spacing is provided between the clip 104 and the holster 102 so as to receive an article 600 (such as an article of clothing 600), and wherein, in the gripping position, the clip 104 is disposed such that, when an article 600 is disposed between the clip 104 and the holster 102, the article 600 is gripped by the clip 104 against at least one gripping surface portion 20 of the holster 102 under the force effecting biasing of the clip 104 towards the gripping position. In this respect, when the clip 104 is disposed in the gripping position, and a handheld electronic device 500 is received and supported by the pocket 108, coupling of the handheld electronic device 500 to the article of clothing 600 is thereby effected. Prior to the article 600 being gripped, the article of clothing 600 has been previously received within the spacing provided between the clip 104 and the holster 102 when the clip 104 is disposed in the open position. In order to effect gripping of an article 600 received within the above-described spacing, the clip 104 is urged into the gripping position by the force effecting biasing of the clip 104 towards the gripping position.

According to the invention, a biasing member 106 is provided for urging or biasing the clip 104 to the gripping position. According to the invention, the biasing member 106 is a resilient member. According to the invention, a suitable resilient member is a spring, such as a leaf spring.

In some embodiments, the clip 104 is sufficiently resilient such that, when a manual force has been applied to effect movement of the clip 104 from the gripping position to the open position, the clip 104 returns to the gripping position when the manual force is removed.

In some embodiments, the handheld electronic device 500 is a BlackBerry Bold™ (BlackBerry 9000™) manufactured by Research In Motion Limited. Other examples of suitable handheld electronic devices include cellular phones, mobile handhelds, digital wireless phones, 1-way pagers, 1½-way pagers, 2-way pagers, electronic mail appliances, internet appliances, personal digital assistants (PDA), laptop computers, portable digital audio players, and the like.

In some embodiments, the holster 102 includes a front wall portion 110, a rear wall portion 112, side wall portions 114, 116, and a floor 118, which co-operate to define a pocket 108. In this respect, the clip 104 is pivotally coupled to the rear wall portion 112.

In some embodiments, there is provided a strap 115 which is attached to an exterior surface of the rear wall portion 112 and extends into a space disposed above the pocket 108 and is configured for releasable coupling to an exterior surface of the front wall portion 110. For example, the releasable coupling is effected by interaction of hook and loop type material such as Velcro™. Alternatively, the strap 115 includes a magnet and the front wall portion 110 includes a magnet, and the strap 115 is urged towards coupling with the front wall portion 110 when the magnet of the strap 115 becomes disposed in sufficiently close proximity to the magent of the front wall portion 110 such that the magnetic fields of each of the magnets interact to effect an operative attractive force between them.

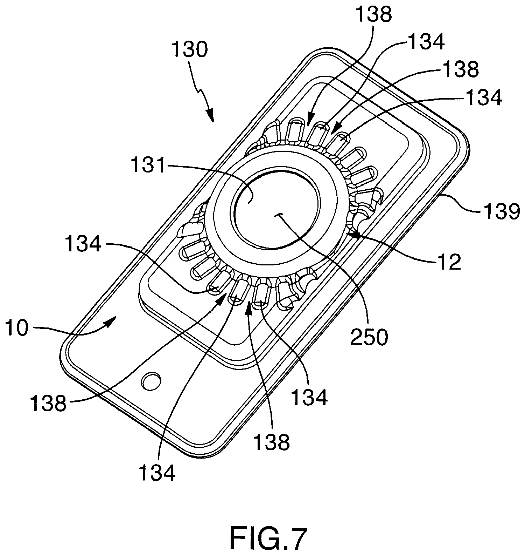

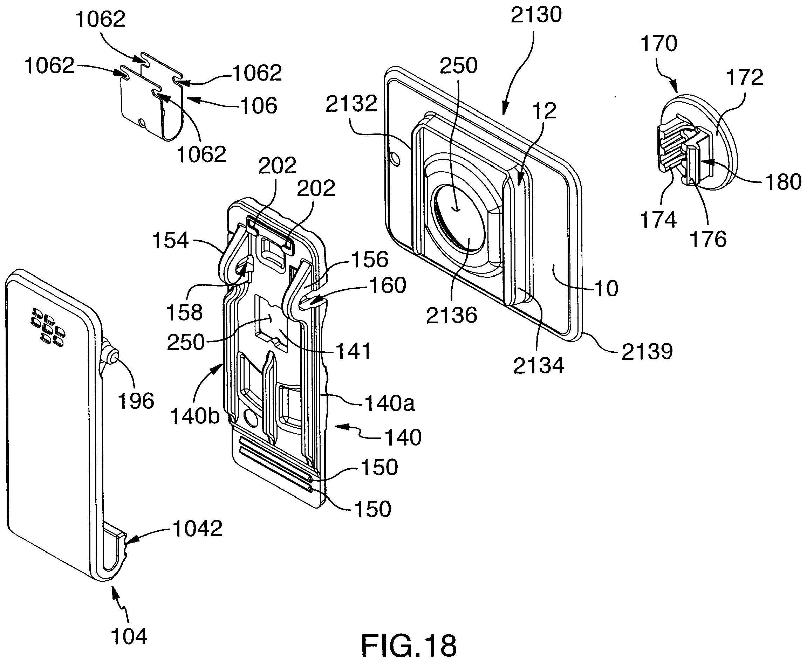

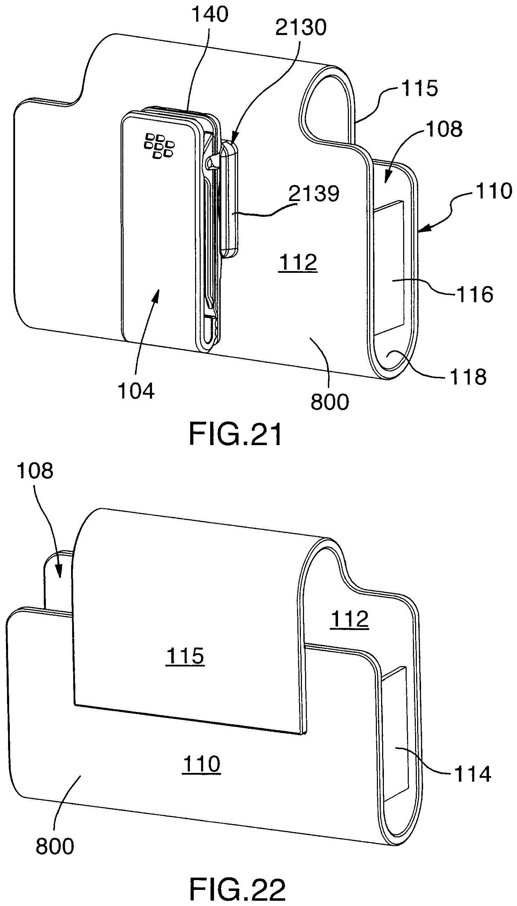

Referring to Figures 1 and 21, in some embodiments, the holster 102 includes a device retainer structure 800 and a clip integrator plate 139 or 2139. Each one of the device retainer structure 800 and the clip integrator plate 139 or 2139 contribute to the support of the handheld electronic device 500 received within the pocket 108. Referring to Figures 7 and 18, the clip integrator plate 139 or 2139 includes a clip mounting surface 10 and a device retainer attachment surface 12. For example, in some embodiments, the clip mounting surface 10 merges with the device retainer attachment surface 12. The clip mounting surface 10 is coupled to the clip 104. For example, the coupling to the clip 104 is effected through a clip mounting structure 140, as is explained below. The device retainer attachment surface 12 is attached to the device retainer structure 800. For example, the attachment is effected by adhesion, such as by gluing. The clip mounting surface 1392 is raised relative to the device retainer attachment surface 1394.

### (A) ASPECT RELATING TO SPACING OF HANDHELD ELECTRONIC DEVICE RELATIVE TO ARTICLE OF CLOTHING TO WHICH IT IS COUPLED

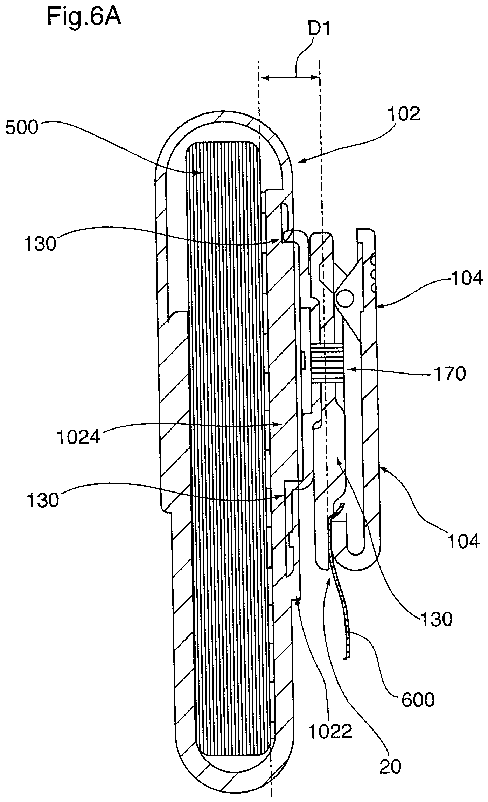

Referring to Figure 6A, in one aspect, when the coupling of the handheld electronic device 500 to the article 600 is effected, the minimum distance (D1) between the handheld electronic device 500 and each one of the at least one gripping surface portion 20 of the holster 102 is at least eighteen (18) millimeters. For example, in some embodiments, the minimum distance is between eighteen (18) millimeters and twenty-two (22) millimeters. In some embodiments, the minimum distance is provided to minimize the specific absorption rate ("SAR), which is a measure of the rate at which radio frequency energy is absorbed by the body when exposed to a radio frequency electromagnetic field, when the handheld device is coupled near a person's body (such as when the handheld device is coupled, using the apparatus, to an article of clothing worn by a person).

### (B) ASPECT RELATING TO SPACING OF INTERIOR SUPPORT SURFACE PORTIONS OF HOLSTER RELATIVE TO ARTICLE OF CLOTHING TO WHICH HOLSTER IS COUPLED

Referring to Figure 6A, the holster 102 includes an operative interior holster surface fraction consisting of at least one operative interior holster surface portion 1024. Each one of the at least one operative interior holster surface portion 1024 is configured to oppose and at least contribute support to a handheld electronic device 500 when the handheld electronic device 500 is received and supported within the pocket 108.

When the clip 104 is disposed in the gripping position, each one of the at least one operative interior holster surface portion 1024 is spaced apart from each one of the at least one gripping portion 20 of the holster 102 by a respective minimum distance (D2) of at least eighteen (18) millimetres. For example, in some embodiments, each one of the at least one operative interior holster surface portion is spaced apart from each one of the at least one gripping surface portion 20 by a respective minimum distance of between eighteen (18) millimeters and twenty-two (22) millimetres. In some embodiments, the minimum distance is provided to minimize the specific absorption rate ("SAR), which is a measure of the rate at which radio frequency energy is absorbed by the body when exposed to a radio frequency electromagnetic field, when the handheld device is coupled near a person's body (such as when the handheld device is coupled, using the apparatus, to an article of clothing worn by a person).

In some embodiments, the operative interior holster surface fraction is disposed opposite to the operative exterior holster surface fraction.

In some embodiments, the operative interior holster surface fraction is disposed on an interior surface of the rear wall of the holster.

### (C) EMBODIMENTS WITH SELECTIVELY POSITIONABLE CLIP

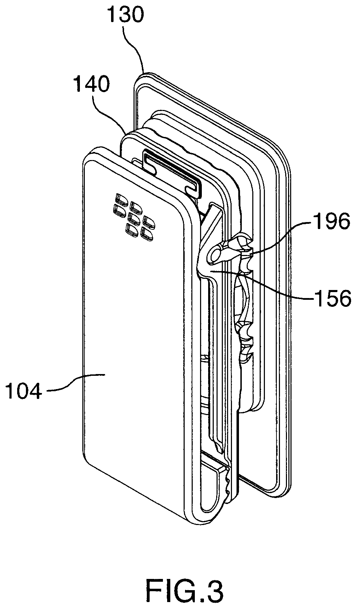

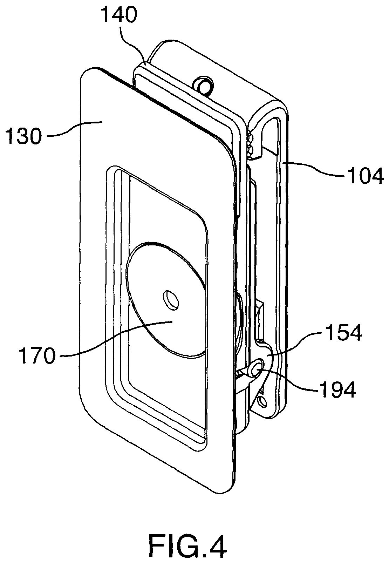

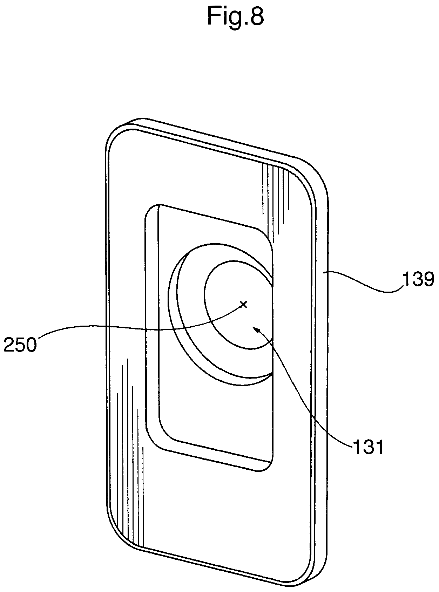

In some embodiments, the clip 104 is selectively positionable relative to the holster 102. Embodiments whose clip 14 is selectively positionable relative to the holster include those where the holster 104 is configured to support and retain a handheld electronic device 500 in a substantially vertical orientation. In this respect, and referring to Figures 3 to 6A, 6B, 7, and 8, in some embodiments, a positionable clip effecting integrator 130 is provided and defines an exterior surface portion 132 of the rear wall portion 112 of the holster 102. The positionable clip effecting integrator 130 co-operates with a clip mounting structure 140 to facilitate selective positioning of the clip mounting structure 140 relative to the holster 102. In this respect, the positionable clip effecting integrator 130 includes an array of ribs 134 of equal or substantially equal size an shape which extend radially outward and define a peripheral boundary centred on the axis 136. Spaced between each one of the ribs 134 is a landing surface 138 such that a plurality of landing surfaces 138 is provided. The ribs 134 and the landing surfaces 138 co-operates with the clip mounting structure 140 so as to effect selective positioning of the clip 104, as will be further explained below. In some embodiments, the positionable clip effecting integrator 130 is in the form of a plate 139 which is integrated within the rear wall portion 112 of the holster 102. For example, in some embodiments, the edges of the plate 139 are chamfered to mitigate against tearing of the device retainer structure 800.

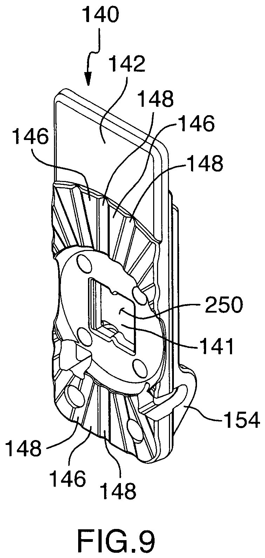

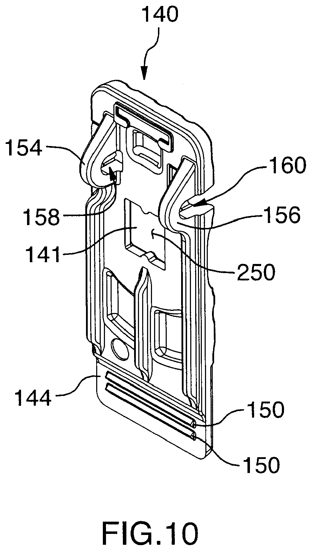

Referring to Figures 3 to 6A, 6B, 9, and 10, the clip mounting structure 140 is rotatably coupled to the rear wall portion 112 of the holster 102 so as to effect selective positioning of the clip 104 relative to the holster 102. The clip mounting structure 140 includes a rear wall mounting side surface 142 configured for mounting to the rear wall portion 112, and a clip mounting side surface 144 which is coupled to the clip 104 and is also configured to co-operate with the clip 104 to effect gripping of an article 600 (such as an article of clothing) disposed between the clip 104 and the clip mounting structure 140. In this respect, the clip mounting side surface 144 includes the at least one gripping surface portion 20 of the holster 102. The clip 104 is pivotally coupled to the clip mounting structure 140 to facilitate movement between open, closed, and gripping positions.

A plurality of landing surfaces 146 and a plurality of receiving grooves 148 are defined by the rear wall mounting side surface 142. The landing surfaces 146 are in an array extending radially outward from the axis 122. The receiving grooves 148 are spaced equally between the landing surfaces 146. The receiving grooves 148 and the landing surfaces 146 cooperate with the ribs 134 and the landing surfaces 138 to effect positioning of the clip mounting structure 140 relative to the rear wall portion 112. Selective positioning of the clip 104 relative to the holster 102 is effected by rotation of the clip 102, which is translated to rotation of the clip mounting structure 140, by virtue of the coupling of the clip 104 to the clip mounting structure 140, to one of the predetermined positions defined by the co-operation of the receiving grooves 148 and the landing surfaces 146 of the clip mounting structure 140 with the ribs 134 and the landing surfaces 138 of the positionable clip effecting integrator 130, as will be described in further detail below.

In some embodiments, toe grips 150 extend from the clip mounting side surface 144 to contribute to the gripping of the article of clothing disposed between the clip 102 and the clip mounting structure 140 when the clip 102 is disposed in the gripping position. The toe grips 150 are located proximate to the bottom edge of the clip mounting side surface 144.

In some embodiments, a pair of spaced apart hinge structures 154, 156 extend from the gripping side surface 144. Each one of the hinge structures 154, 156 includes a respective one of receiving apertures 158, 160 which are configured to effect pivotal coupling of the clip 102 to the clip mounting structure 140.

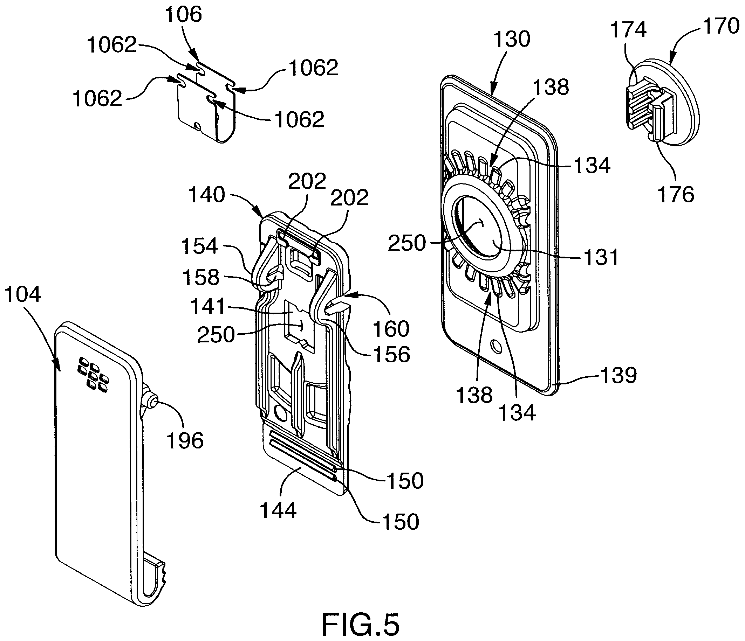

Referring to Figures 5, 11, and 12, in some embodiments, there is provided a resilient retainer clip (or coupler) 170 which is configured to couple the clip mounting structure 140 to the holster 102 while permitting rotational movement of the clip mounting structure 140 relative to the holster 102 and about an axis 250. The retainer clip 170 is integrated within the rear wall portion 112 of the holster 102. The retainer clip 170 includes a base 172 and a pair of spaced apart retention tabs 174, 176 which extend from the base 172. Each one of the retention tabs 174, 176 includes a respective one of retainer surfaces 178, 180. Each one of the retainer surfaces 178, 180 extend in opposite directions relative to one another. The retainer clip 170 is positioned such that the retentions tabs 174, 176 of the retainer clip 170 extend through apertures 131, 141 provided (each of the apertures 131, 141 is centred on the axis 250) on the positionable clip effecting integrator 130 and the clip mounting structure 140, respectively. The base 172 is oversized relative to the aperture 131 of the integrator 130 such that the base 172 cannot be inserted through the aperture 131. In extending through the aperture 141, the retainer surfaces 178, 180 become disposed in snap-fit engagement with operative surface portions of the clip mounting structure 140 extending from the aperture 141 and co-operate with the edge of the aperture 141 to effect the retention of the clip mounting structure 140 to the holster 102 while permitting rotational movement of the clip mounting structure 140 relative to the holster 102 about the axis 250. In those embodiments where the positionable clip effecting integrator 130 is in the form of a plate 139 integrated within the rear wall portion 112 of the holster, the plate 139 includes a recess 1391 which receives the base 172 and is shaped to facilitate rotation of the base 172 in response to rotational forces applied to the clip 104 which are then translated to the clip mounting structure 140.

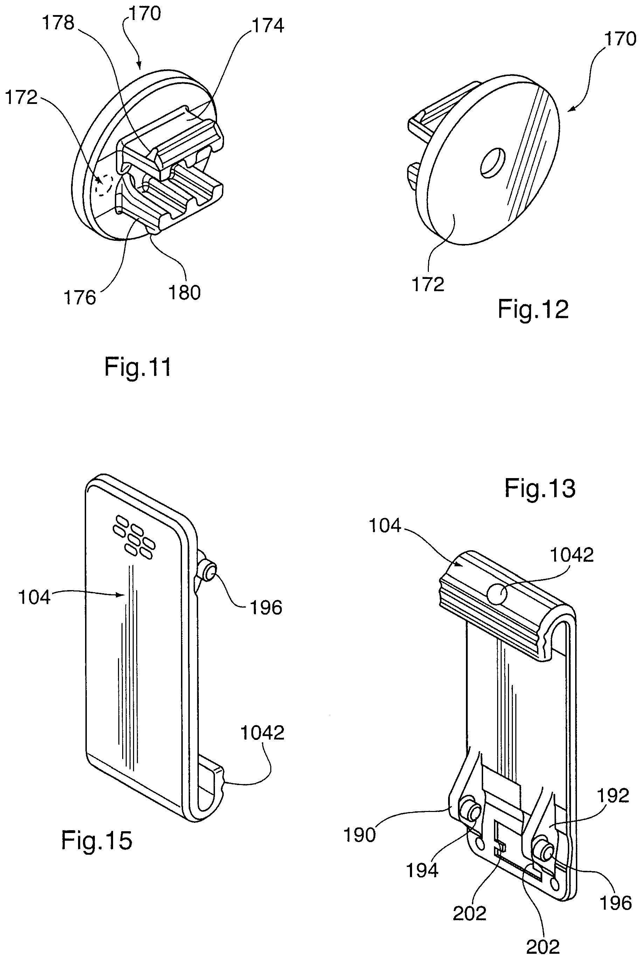

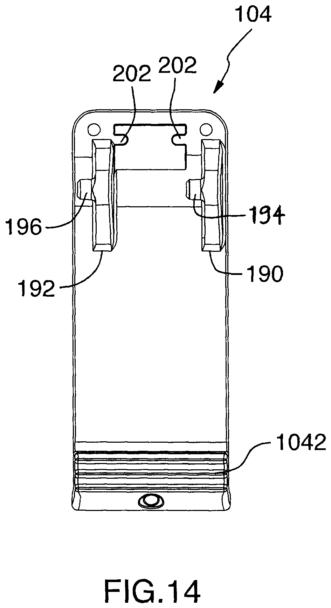

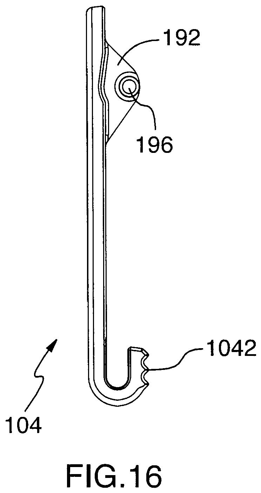

Referring to Figures 13 to 16, the clip 104 is pivotally coupled to the clip mounting structure 140. The clip 104 includes a pair of spaced apart hinge structures 190, 192. Each one of the hinge structures 190, 192 includes a respective one of the hinge pins 194, 196. Each one of the hinge pins 194, 196 is received in a respective one of the receiving apertures 158, 160 of the clip mounting structure 140, to thereby effect the pivotal coupling of the clip 104 to the clip mounting structure 140. The clip 104 includes a gripping surface 1042 for gripping an article of clothing 600 when the clip 104 is disposed in the gripping position.

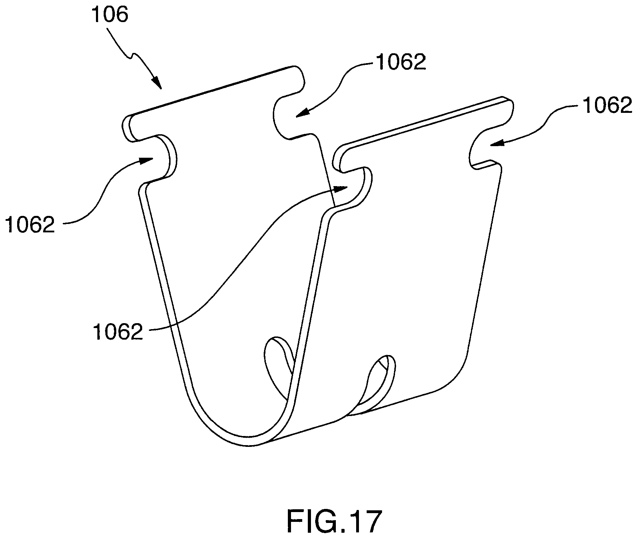

Referring to Figures 5 and 17, the clip 104 is biased to the closed position by the biasing member 106. In some embodiments, the biasing member 106 is in the form of a leaf spring 106 which is mounted between the clip 102 and the clip mounting structure 140. For example, the leaf spring 106 is mounted near the pivoting axis defined by the pivotal coupling effected when the hinge pins 194, 196 are received with the receiving apertures 158, 160, respectively. The leaf spring 106 is preferably "C-shaped" so as to urge the gripping end of the clip 102 toward engagement with the toe grips 150 of the clip mounting structure 140, so as to effect gripping of the article of clothing 600. In this way, the clip 104 and the clip mounting structure 140 are mated without applying a holding force during assembly. The clip 104 and the clip mounting structure 140 are formed to include a number of retaining tabs 202, which are received within corresponding interlocking recesses 1062 formed on the leaf spring 106. The leaf spring 106 is of such a width 1064 that once installed, uncoupling of the clip 104 from the clip mounting structure 140 is rendered fairly difficult. The leaf spring 106 serves both a biasing function and an assembly securing feature. The tabs and recesses 202, 1062 co-operate to retain the leaf spring 106 between the clip 104 and the clip mounting structure 140, and mitigate against their uncoupling.

The clip 104 pivots on the hinge pins 194, 196. This allows the user to push down near the top of the clip 104 to raise the other end of the clip 104. Fabric and other materials may then be slid between the raised end of the clip 104 and the clip mounting structure 140. The toe grips 150 and the gripping surface 1062 grip whatever is placed between them as the user discontinues pressure on the clip 104.

The manner of attachment and assembly of the clip 104 relative to the clip mounting structure 140 is also described with respect to corresponding components in commonly owned United States Patent. No. 6,073,318 for "Retaining Clip Assembly", issued Jun. 13, 2000 (see column 2, line 32 to column 3, line 6). With the clip 104, the holster 102 can become coupled to an article of clothing worn by a person, while supporting and retaining the handheld device 500. For example, the apparatus 100 can be coupled to a belt or the waistline of clothes.

When the clip mounting structure 140 is mounted to the positionable clip effecting integrator 130, the ribs 134 extend into the grooves 148. Simultaneously, the landing surfaces 138 extend to the landing surfaces 146, thus defining the mounting system and forming a co-operating, interlocking relationship between the clip 104 and the holster 102. This interlocking relationship allows the clip 104 to be releasably held in a desired position relative to the holster 104 by the resilience of the retainer clip 170.

The clip 104 can be swivelled about the axis 250 by the user. The ribs 134 function as detents to the landing surfaces 146. The landing surfaces 146 lift over the corresponding ribs 134 and settle into the next available landing surfaces 138 when the clip 104 is rotated about the axis 250. The user can adjust the orientation of the clip assembly 104 relative to the holster 102 and it will stay in that orientation until the user desires to change it again. That is, the user has the option of adjusting the orientation of the clip assembly 104 relative to the holster 102 by increments equal to the width or spacing of the ribs 134.

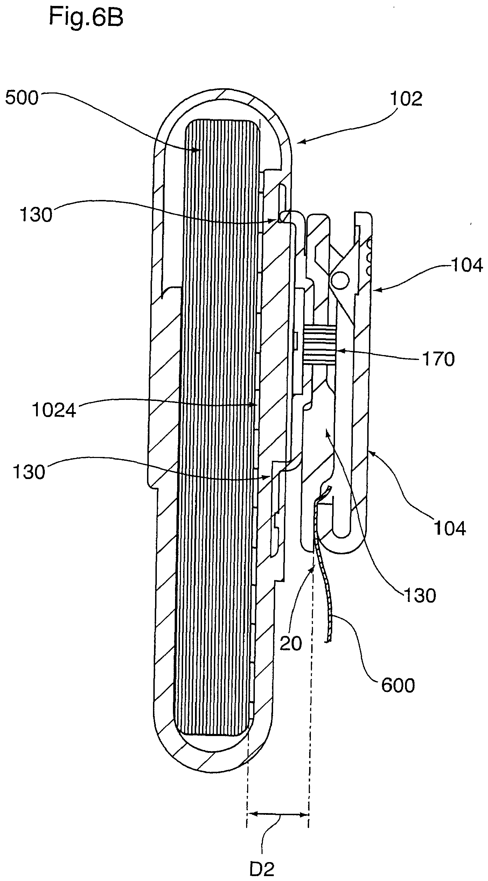

It is understood that each one of the above-described embodiments with the selectively positionable clip incorporates one of the aspects above-described in (A) and (B), which are further illustrated with respect to a selectively positionable clip embodiment in Figure 6A and 6B.

### (D) EMBODIMENTS WITH STATIONARY CLIP

In some embodiments, the clip 104 is stationary relative to the holster 102. Referring to Figures 21 and 22, embodiments whose clip 104 is stationary relative to the holster 102 include those where the holster 102 is configured to support and retain the handheld electronic device 500 in a substantially horizontal orientation.

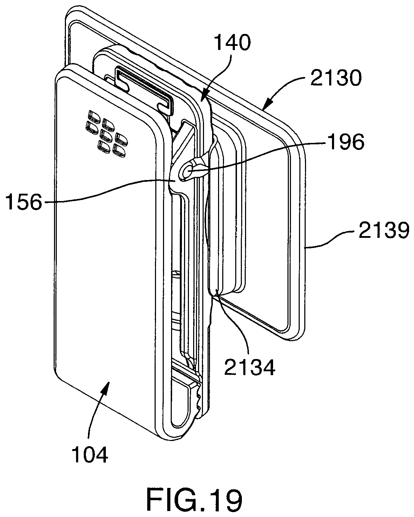

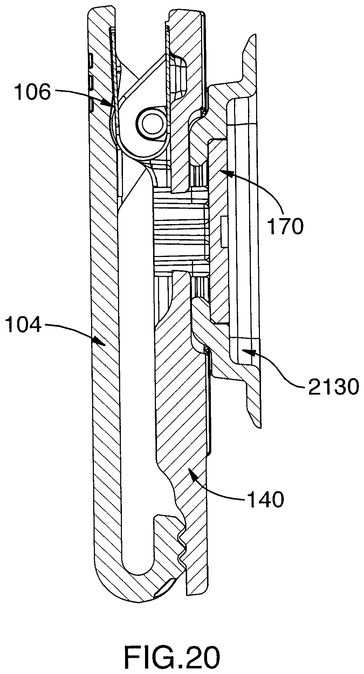

Referring to Figures 18 to 20, embodiments whose clip 104 is stationary relative to the holster 102 can, with the exception of the positionable clip effecting integrator 130, consist of parts which are the same as corresponding parts of embodiments whose clip 104 is positionable relative to the holster 102. Relative to embodiments whose clip 104 is positionable relative to the holster 102, in embodiments whose clip 104 is stationary relative to the holster 102, a stationary clip effecting integrator 2130 replaces the postionable clip effecting integrator 130.

In some embodiments, the stationary clip effecting integrator 2130 is provided and defines an exterior surface portion of the rear wall portion 112 of the holster 102. In some embodiments, the stationary clip effecting integrator 2130 is in the form of a plate 2139 which is integrated within the rear wall portion 112 of the holster 102. For example, in some embodiments, the edges of the plate 2139 are chamfered to mitigate against tearing of the device retainer structure 800.

The stationary clip effecting integrator 2130 includes an aperture 2136 which receives the retainer clip 170. The retainer tabs 174, 176 extend through the aperture 2136 and apply a force which effects coupling of the clip mounting structure 140 to the holster 102 by press-fit engagement of the clip mounting structure 140 to the stationary clip effecting integrator, and, therefore, the holster 112, as described above. The stationary clip effecting integrator 2130 co-operates with the clip mounting structure 140 to facilitate stationary (or substantially stationary) disposition of the clip mounting structure 140 relative to the holster 102. In this respect, the stationary clip effecting integrator 2130 includes a pair of spaced-apart, opposing, parallel (or substantially parallel) ribs 2132, 2134 extending from a surface of the side of the integrator 2130 which is disposed in opposition to the clip mounting structure 140. The ribs 2132, 2134 function as an interference structure which maintains the clip mounting structure 140 in stationary (or substantially stationary) disposition relative to the holster 102 by co-operating with corresponding structures provided on the clip mounting structure 140 to effect interference to rotational movement of the corresponding structures in a plane which is orthogonal to the force which effects the press-fit engagement between the clip mounting structure 140 and the stationary clip effecting integrator 2130. In this respect, in some embodiments, the integrator 2130 is configured such that, each one of the ribs 2132, 2134 is disposed about the periphery and opposes a respective one of opposite side edge portions 140a, 140b of the clip mounting structure 140. In this respect, the ribs 2132, 2134 function to provide an interference to rotational movement of the clip mounting structure 140 by interfering with rotational movement of the side edge portions 140a, 140b, respectively.

It is understood that each one of the above-described embodiments with the stationary clip may incorporate one of the aspects above-described in (A) and (B).

### (E) METHOD OF MANUFACTURING EMBODIMENT OF APPARATUS FOR SUPPORTING A HANDHELD ELECTRONIC DEVICE

There is provided a method of manufacturing according to the independent claim 6.

The method includes providing a clip 104. Both a stationary clip effecting integrator 2130 and a positionable clip effecting integrator 130 are also provided. When provision of a holster 102 is effected by coupling of the stationary clip effecting integrator 2130 to the holster preform 700 and when the stationary clip effecting integrator 2130 is also coupled to the clip 104, a stationary clip is provided which is disposed in a stationary condition relative to the holster 102, and wherein, when provision of a holster 102 is effected by coupling of the positionable clip effecting integrator 130 to the holster preform 700 and when the positionable clip effecting integrator 130 is also coupled to the clip 104, a positionable clip is provided which is disposed in a positionable condition relative to the holster 102. One of the integrators 130, 2130 is then selected. A holster perform is provided. Formation of the apparatus 100 is effected, wherein the apparatus 100 includes a holster 102 coupled to the clip 104, wherein the holster 102 includes the holster preform 700 and the selected integrator 130 or 2130, wherein the holster preform 700 is coupled to the selected integrator 130 or 2130, and wherein the selected integrator 130 or 2130 is coupled to the clip 104.

In some embodiments, the formation is effected by coupling a clip assembly to the holster perform 700, wherein the clip assembly includes the selected integrator 130 or 2130. For example, the clip assembly also includes the clip 104, the clip mounting structure 140, and the retainer 170.

In some embodiments, the provided holster perform 700 is selected based on the selection of the integrator 130 or 2130. For example, when a positionable clip effecting integrator 130 is selected, a holster perform 700 is selected which is predisposed to effecting formation of a vertically oriented holster, such as that illustrated in Figures 1 and 2. As a further example, when a stationary clip effecting integrator 2130 is selected, a holster perform 700 is selected which is predisposed to effecting formation of a horizontally oriented holster, such as that illustrated in Figures 21 and 22.

In some embodiments, the forming of the apparatus 100 includes coupling the selected integrator 130 or 2130 to the clip 104 to effect formation of a predetermined clip configuration, and then coupling the predetermined clip configuration to the holster perform 700.

In some embodiments, the forming of the apparatus 100 includes coupling the selected integrator 130 or 2130 to the holster preform 700 to effect formation of the holster 102, and then coupling the clip 104 to the holster 102.

In some embodiments, the method of manufacturing the apparatus 100 includes the following:
(a) providing a stationary clip effecting integrator 2130 and a positionable clip effecting integrator 130 (for example, each one of the integrators is made from CYCOLOY C1200 HF™ manufactured by SABIC Innovative Plastics)
(b) selecting one of the stationary clip effecting integrator 2130 and the positionable clip effecting integrator 130;
(c) cutting material (eg. leather) to the desired shape of the holster 102, and providing a cut-out in the material to facilitate incorporation of a selected integrator;
(d) gluing stiffener structure (such as plastic material) to the inside surface of the material to effect stiffening of the material and thereby provide a composite material (eg. thickness is about three (3) millimetres);
(e) positioning the selected integrator 130 or 2130 into the cut-out in the composite material;
(f) positioning the retainer clip 170 (for example, the retainer clip 170 is made from NORYL NWR5810™ manufactured by SABIC Innovative Plastics) for insertion through the aperture 131 provided in the selected integrator 130 or 2130;
(g) mounting the clip 104 (for example, the clip 104 is made from NORYL NWR5810™ manufactured by SABIC Innovative Plastics) onto the clip mounting structure 140 (for example, the clip mounting structure 140 is made from NORYL NWR5810™ manufactured by SABIC Innovative Plastics) by inserting the hinge pins 194, 196 of the clip 104 into the corresponding apertures 158, 160 provided on the hinge structures 154, 156, respectively, of the clip mounting structure 140;
(h) integrating the leaf spring 106 between the clip 104 and the clip mounting structure 140 by positioning the tabs 202 in the corresponding recesses 1062 to effect interlocking between the leaf spring 106 and each of the clip 104 and the clip mounting structure 140, and thereby provide a clip assembly;
(i) positioning the clip assembly over the selected integrator such that the retainer 170 is received through the aperture 141 provided in the clip mounting structure 140 and engages the clip mounting structure 140 in snap-fit engagement, as described above;
(j) gluing further internal padding structure (eg. cardboard and/or foam, having a thickness of about three (3) millimetres) over the leather composite and the selected integrator;
(k) applying liner (eg. felt, 0.5 millimetres thick) over the internal structure and stitching the liner to the composite material; and
(l) stitching side wall portions to the rear wall portion.

It will be appreciated that the above description relates to the preferred embodiments by way of example only. Many variations will be obvious to those knowledgeable in the field, and such variations are within the scope of the appended claims.

## Claims

1. An apparatus (100) for supporting a handheld electronic device (500), comprising:
a holster (102) including a pocket for receiving a handheld electronic device (500) and supporting the received handheld electronic device (500); and
a clip (104) pivotally coupled to the holster (102) and configured for movement between an open position and a gripping position and being biased towards the gripping position, wherein the clip (104) comprises a gripping surface (1042), wherein, in the open position, spacing is provided between the clip (104) and the holster (102) so as to receive an article (600), and wherein, in the gripping position, the clip is disposed such that, when an article is disposed between the clip (104) and the holster (102), the article (600) is gripped by the clip against at least one gripping surface portion (20) of the holster (102) under the force effecting biasing of the clip towards the gripping position, and such that, when the clip (104) is disposed in the gripping position, and a handheld electronic device (500) is received and supported by the pocket, coupling of the handheld electronic device (500) to the article (600) is thereby effected;
**characterized in that:**
the clip (104) is biased by a leaf spring (106), wherein, when the article is disposed between the clip (104) and the holster (102), the leaf spring (106) urges a gripping end of the clip (104) toward engagement;
the holster (102) includes an operative interior holster surface fraction consisting of at least one operative interior holster surface portion which is configured to oppose and at least contribute support to a handheld electronic device (500) when the handheld electronic device (500) is received and supported within the pocket;
and, when the clip is disposed in the gripping position, each one of the at least one operative interior holster surface portion is spaced apart from each one of the at least one gripping surface portion of the holster by a respective minimum distance of at least eighteen (18) millimetres.

2. The apparatus (100) as claimed in claim 1, wherein, prior to the article (600) being gripped,
the article (600) has been previously received within the spacing provided when the clip (104) is disposed in the open position.

3. The apparatus (100) as claimed in claim 1, wherein, prior to the article (600) being gripped,
the article (600) has been previously received within the spacing provided when the clip (104) is disposed in the open position, and the clip (104) is urged into the gripping position by the force effecting biasing of the clip towards the gripping position.

4. The apparatus (100) as claimed in claim 1, wherein the operative interior holster surface fraction is disposed opposite to the at least one gripping surface portion

5. The apparatus (100) as claimed in claim 1, wherein the pocket is defined, at least in part, by a rear wall, and the operative interior holster surface fraction is disposed on the interior surface of the rear wall.

6. A method of manufacturing an apparatus (100) for supporting a handheld electronic (500) device according to claim 1, comprising:
providing a holster preform;
providing a clip;
providing a stationary clip effecting integrator and a positionable clip effecting integrator, wherein, when provision of a holster is effected by coupling of the stationary clip effecting integrator to the holster perform and when the stationary clip effecting integrator is also coupled to the clip (104), a stationary clip is provided which is disposed in a stationary condition relative to the holster, and wherein, when provision of a holster is effected by coupling of the positionable clip effecting integrator to the holster perform and when the positionable clip effecting integrator is also coupled to the clip, a positionable clip is provided which is disposed in a positionable condition relative to the holster;
selecting one of the integrators;
effecting formation of the apparatus (100), wherein the apparatus (100) includes a holster (102) coupled to the clip, wherein the holster includes the holster preform and the selected integrator, wherein the holster preform is coupled to the selected integrator, and wherein the selected integrator is coupled to the clip (104).

7. The method as claimed in claim 6, wherein the forming of the apparatus (100) includes:
coupling the selected integrator to the clip (104) to effect formation of a predetermined clip configuration; and
coupling the predetermined clip configuration to the holster preform.

8. The method as claimed in claim 6, wherein the forming of the apparatus (100) includes; coupling the selected integrator to the holster preform to effect formation of the holster; and coupling the clip to the holster (102).

9. The method as claimed in claim 6, wherein the forming is effected by coupling a clip assembly to the holster perform, wherein the clip assembly includes the selected integrator.

10. The method as claimed in claim 6, wherein the provided holster perform is selected based on the selection of the integrator.

## Patentansprüche

1. Vorrichtung (100) zum Tragen eines mobilen elektronischen Geräts (500), umfassend:
eine Halfter (102), der eine Tasche zum Aufnehmen eines mobilen elektronischen Geräts (500) und Tragen des aufgenommenen mobilen elektronischen Geräts (500) beinhaltet; und
eine Klammer (104), die schwenkbar mit dem Halfter (102) verbunden und so konfiguriert ist, dass sie zwischen einer offenen Position und einer Greifposition bewegt wird und in die Greifposition vorgespannt wird, wobei die Klammer (104) eine Greiffläche (1042) umfasst, wobei in der offenen Position ein Zwischenraum zwischen der Klammer (104) und dem Halfter (102) bereitgestellt ist, um einen Gegenstand (600) aufzunehmen, und wobei die Klammer in der Greifposition so angeordnet ist, dass, wenn ein Gegenstand zwischen der Klammer (104) und dem Halfter (102) angeordnet ist, der Gegenstand (600) von der Klammer an zumindest einem Greifflächenabschnitt (20) des Halfters (102) unter der Kraft gegriffen wird, die ein Vorspannen der Klammer hin in die Greifposition bewirkt, und so dass eine Verbindung eines mobilen elektronischen Geräts (500) mit dem Gegenstand (600) bewirkt wird, wenn die Klammer (104) in der Greifposition angeordnet ist und das mobile elektronische Gerät (500) in der Tasche aufgenommen ist und von dieser getragen wird;
**dadurch gekennzeichnet, dass:**
die Klammer (104) durch eine Blattfeder (106) vorspannt wird, wobei, wenn der Gegenstand zwischen der Klammer (104) und dem Halfter (102) angeordnet ist, die Blattfeder (104) ein Greifende der Klammer (104) in Eingriff treibt;
der Halfter (102) einen funktionswirkenden inneren Halfterflächenteilbereich beinhaltet, der aus zumindest einem funktionswirkenden inneren Halfterflächenteilbereich besteht, der so konfiguriert ist, dass er einem mobilen elektronischen Gerät (500) gegenüberliegt und dieses zumindest mitträgt, wenn das mobile elektronische Gerät (500) in der Tasche aufgenommen und von dieser getragen wird;
und wenn die Klammer in der Greifposition angeordnet ist, jeder des zumindest einen funktionswirkenden inneren Halfterflächenteilbereichs um eine jeweilige Mindestdistanz von zumindest achtzehn (18) Millimetern von jedem des zumindest einen Greifflächenabschnitts des Halfters beabstandet ist.

2. Vorrichtung (100) nach Anspruch 1, wobei, bevor der Gegenstand (600) gegriffen wird,
der Gegenstand (600) zuvor in dem Zwischenraum aufgenommen wurde, der bereitgestellt wird, wenn die Klammer (104) in der offenen Position angeordnet ist.

3. Vorrichtung (100) nach Anspruch 1, wobei, bevor der Gegenstand (600) gegriffen wird,
der Gegenstand (600) zuvor in dem Zwischenraum aufgenommen wurde, der bereitgestellt wird, wenn die Klammer (104) in der offenen Position angeordnet ist, und die Klammer (104) von der Kraft, die das Vorspannen der Klammer hin in die Greifposition bewirkt, in die Greifposition getrieben wird.

4. Vorrichtung (100) nach Anspruch 1, wobei der funktionswirkende innere Halfterflächenteilbereich gegenüber dem zumindest einen Greifflächenabschnitt angeordnet ist.

5. Vorrichtung (100) nach Anspruch 1, wobei die Tasche zumindest teilweise durch eine Rückwand definiert ist und der funktionswirkende innere Halfterflächenteilbereich auf der Innenfläche der Rückwand angeordnet ist.

6. Verfahren zum Herstellen einer Vorrichtung (100) zum Tragen eines mobilen elektronischen (500) Geräts nach Anspruch 1, umfassend:
Bereitstellen eines Halftervorformlings;
Bereitstellen einer Klammer;
Bereitstellen eines unbeweglichen Klemmbewirkungsintegrators und eines positionierbaren Klemmbewirkungsintegrators, wobei, wenn das Bereitstellen eines Halfters durch Verbinden des unbeweglichen Klemmbewirkungsintegrators mit dem Halftervorformling bewirkt wird und wenn der unbewegliche Klemmbewirkungsintegrator auch mit der Klammer (104) verbunden ist, eine unbewegliche Klammer bereitgestellt wird, die in einem in Bezug auf den Halfter unbeweglichen Zustand ist, und wobei, wenn das Bereitstellen eines Halfters durch Verbinden des positionierbaren Klemmbewirkungsintegrators mit dem Halftervorformling bewirkt wird und wenn der positionierbare Klemmbewirkungsintegrator auch mit der Klammer (104) verbunden ist, eine positionierbare Klammer bereitgestellt wird, die in einem zum Halfter positionierbaren Zustand angeordnet ist;
Auswählen eines der Integratoren;
Bewirken der Bildung der Vorrichtung (100), wobei die Vorrichtung (100) einen Halfter (102) beinhaltet, der mit der Klammer verbunden ist, wobei der Halfter den Halftervorformling und den ausgewählten Integrator beinhaltet, wobei der Halftervorformling mit dem ausgewählten Integrator verbunden wird, und wobei der ausgewählte Integrator mit der Klammer (104) verbunden wird.

7. Verfahren nach Anspruch 6, wobei das Bilden der Vorrichtung (100) beinhaltet:
Verbinden des ausgewählten Integrators mit der Klammer (104), um die Bildung einer vordefinierten Klammerkonfiguration zu bewirken; und
Verbinden der vordefinierten Klammerkonfiguration mit dem Halftervorformling.

8. Verfahren nach Anspruch 6, wobei das Bilden der Vorrichtung (100) beinhaltet;
Verbinden des ausgewählten Integrators mit dem Halftervorformling, um die Bildung des Halfters zu bewirken; und
Verbinden der Klammer mit dem Halfter (102).

9. Verfahren nach Anspruch 6, wobei das Bilden durch Verbinden einer Klammerbaugruppe mit dem Halftervorformling bewirkt wird, wobei die Klammerbaugruppe den ausgewählten Integrator beinhaltet.

10. Verfahren nach Anspruch 6, wobei der bereitgestellte Halftervorformling auf Basis der Auswahl des Integrators ausgewählt wird.

## Revendications

1. Appareil (100) pour supporter un dispositif électronique portable (500), comprenant :
un étui (102) comprenant une poche pour recevoir un dispositif électronique portable (500) et supporter le dispositif électronique portable reçu (500) ; et
une pince (104) couplée de manière pivotante à l'étui (102) et configurée pour se déplacer entre une position ouverte et une position d'accroche et étant déviée vers la position d'accroche, où la pince (104) comprend une surface d'accroche (1042), où, dans la position ouverte, un espace est fourni entre la pince (104) et l'étui (102) de façon à recevoir un article (600), et où, dans la position d'accroche, la pince est disposée de telle sorte que, lorsqu'un article est disposé entre la pince (104) et l'étui (102), l'article (600) est saisi par la pince contre au moins une partie de surface d'accroche (20) de l'étui (102) sous la force réalisant une déviation de la pince vers la position d'accroche, et de telle sorte que, lorsque la pince (104) est disposée dans la position d'accroche et qu'un dispositif électronique portable (500) est reçu et supporté par la poche, le couplage du dispositif électronique portable (500) à l'article (600) est ainsi réalisé ;
**caractérisé en ce que** :
la pince (104) est déviée par un ressort à lames (106) où, lorsque l'article est disposé entre la pince (104) et l'étui (102), le ressort à lames (106) presse une extrémité d'accroche de la pince (104) en vue d'une mise en prise ;
l'étui (102) comprend une fraction de surface d'étui intérieure opérationnelle constituée par au moins une partie de surface d'étui intérieure opérationnelle qui est configurée pour s'opposer et au moins contribuer au support d'un dispositif électronique portable (500) lorsque le dispositif électronique portable (500) est reçu et supporté à l'intérieur de la poche ;
et, lorsque la pince est disposée dans la position d'accroche, chacune de l'au moins une partie de surface d'étui intérieure opérationnelle est espacée de chacune de l'au moins une partie de surface d'accroche de l'étui selon une distance minimale respective d'au moins dix-huit (18) millimètres.

2. Appareil (100) selon la revendication 1, dans lequel, avant la saisie de l'article (600), l'article (600) a été reçu au préalable dans l'espace prévu lorsque la pince (104) est disposée dans la position ouverte.

3. Appareil (100) selon la revendication 1, dans lequel, avant la saisie de l'article (600), l'article (600) a été reçu au préalable dans l'espace prévu lorsque la pince (104) est disposée dans la position ouverte, et la pince (104) est pressée à l'intérieur de la position d'accroche par la force effectuant une déviation de la pince vers la position d'accroche.

4. Appareil (100) selon la revendication 1, dans lequel la fraction de surface d'étui intérieure opérationnelle est disposée à l'opposé de l'au moins une partie de surface d'accroche.

5. Appareil (100) selon la revendication 1, dans lequel la poche est définie, au moins en partie, par une paroi arrière, et la fraction de surface d'étui intérieure opérationnelle est disposée sur la surface intérieure de la paroi arrière.

6. Procédé de fabrication d'un appareil (100) pour supporter un dispositif électronique portable (500) selon la revendication 1, comprenant les étapes consistant à :
fournir une préforme d'étui ;
fournir une pince ;
fournir un intégrateur effecteur de pince fixe et un intégrateur effecteur de pince pouvant être positionnée, où, lorsque la fourniture d'un étui est effectuée par couplage de l'intégrateur effecteur de pince fixe à la préforme d'étui et lorsque l'intégrateur effecteur de pince fixe est également couplé à la pince (104), une pince fixe est fournie laquelle est disposée dans une condition fixe par rapport à l'étui, et où, lorsque la fourniture d'un étui est effectué par couplage de l'intégrateur effecteur de pince pouvant être positionnée à la préforme d'étui et lorsque l'intégrateur effecteur de pince pouvant être positionnée est également couplé à la pince, une pince pouvant être positionnée est fournie laquelle est disposée dans une condition de façon à pouvoir être positionnée par rapport à l'étui ;
sélectionner un des intégrateurs ;
effectuer la formation de l'appareil (100), où l'appareil (100) comprend un étui (102) couplé à la pince, où l'étui comprend la préforme d'étui et l'intégrateur sélectionné, où la préforme d'étui est couplée à l'intégrateur sélectionné, et où l'intégrateur sélectionné est couplé à la pince (104).

7. Procédé selon la revendication 6, dans lequel la formation de l'appareil (100) comprend les étapes consistant à :
coupler l'intégrateur sélectionné à la pince (104) pour effectuer la formation d'une configuration de pince prédéterminée ; et
coupler la configuration de pince prédéterminée à la préforme d'étui.

8. Procédé selon la revendication 6, dans lequel la formation de l'appareil (100) comprend les étapes consistant à :
coupler l'intégrateur sélectionné à la préforme d'étui pour effectuer la formation de l'étui ; et
coupler la pince à l'étui (102).

9. Procédé selon la revendication 6, dans lequel la formation est effectuée par couplage d'un ensemble formant pince à la préforme d'étui, où l'ensemble formant pince comprend l'intégrateur sélectionné.

10. Procédé selon la revendication 6, dans lequel la préforme d'étui fourni est sélectionnée sur la base de la sélection de l'intégrateur.
